# EUROPEAN PATENT APPLICATION

(11) **EP 1 987 750 A2**
(43) Date of publication of application: **05.11.2008**
(21) Application number: 07018582.2
(22) Date of filing: 21.09.2007
(51) Int. Cl.: A47J 43/044, A47J 31/44

(54) **Appliance for warm milk preparation with or without milk froth**

(30) Priority: 22.09.2006 IT FI20060064
(71) Applicant: AXEL SRL, 50041 Calenzano (IT)
(72) Inventor: Milani, Patrizio, 50141 Florence (IT)
(74) Representative: Paolini, Elena

(57) **Abstract**

Appliance for warm milk preparation with milk froth consists of a reservoir (9) for the milk, a removable cover (2) with frother and electric circuit (3) opportunely fed and controlled automatically by means of a temperature sensor (14). The appliance warms the milk by means of a gas-ring flame or by means of an electric device opportunely realised.

## Description

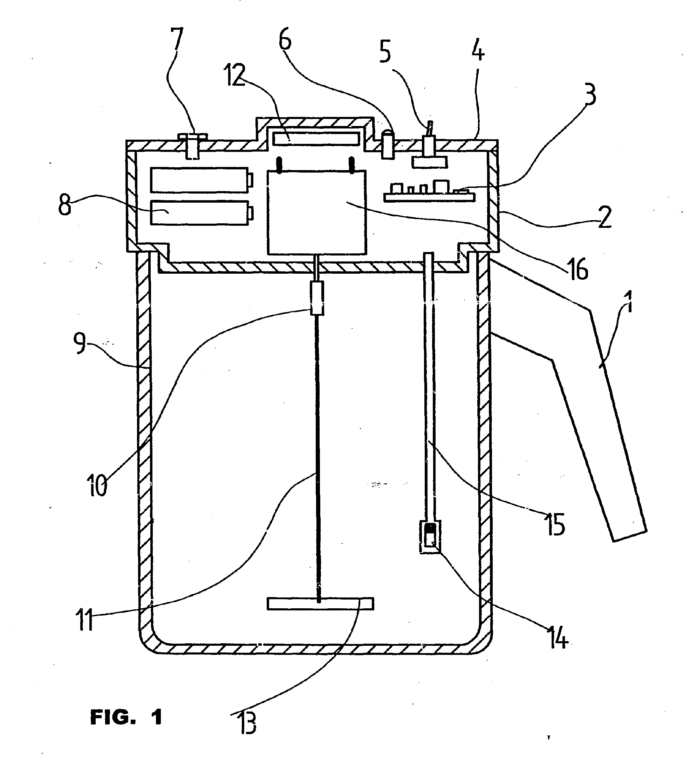

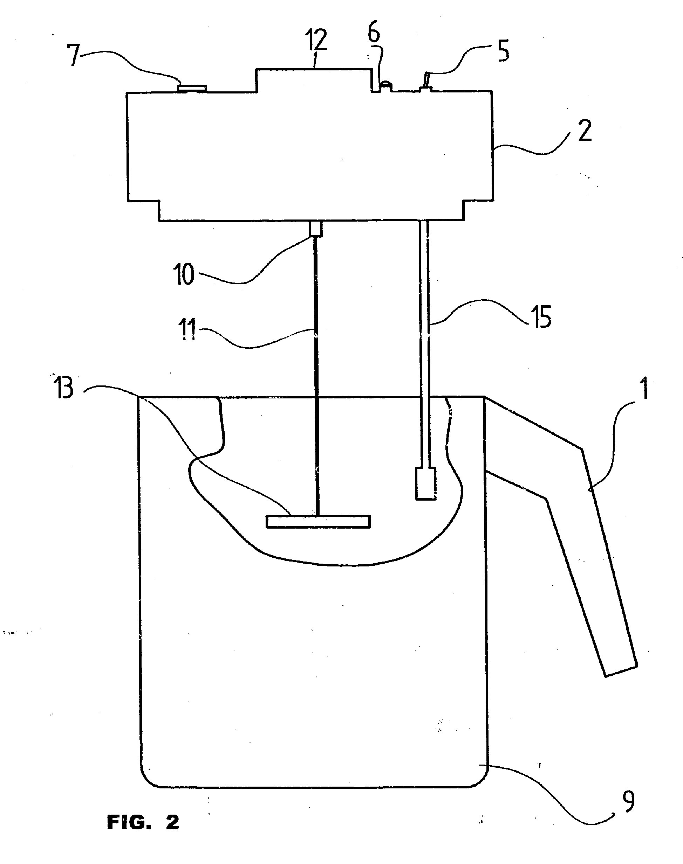

The present invention refers to an appliance able to prepare warm milk with milk froth. A lot of different kind of milk frothers are known in the prior art whose have the aim to prepare milk froth so obtaining then a good cappuccino. One of the more ordinary appliances consists of a plastic grip having in its inside an electric motor, a push-bottom and piles. Onto the motor shaft is inserted a joint that brings an other shaft, generally metallic, on the end of which is fixed an utensil suitable to froth the milk. Said appliance is to be manually used immerging the utensil in a reservoir with milk, previously warmed, where said utensil, rotating by means of the motor started to the push-bottom placed onto the grip, prepares a goods milk froth. Aim of the present invention is an electric household appliance able to make more complete, simply and safety the use of the above cited utensil. The present invention, more precisely, refers to an appliance able to warm the milk at a determined temperature, automatically to froth the milk and to alert with a sound and/or light indicator when the good is ready. Said aim is reached to the present invention by an appliance that consists of a glass, metal, plastic or other material reservoir, suitable for the above aim, that acts as milk container. This reservoir, for warming the milk, can be put directly onto a heat source, for example a gas-ring flame, or it can be equipped of an electric heating part opportunely integrated into the container to be fed with an electric cable or it can have a further separable base equipped with suitable safety connectors and an electric cable. The above described reservoir is closed by an easily removable cover, opportunely realized, housing in its inside a motor, batteries or piles, in case to make work the invented appliance without the alternating current, a temperature sensor able to open or close a circuit which is housed in a suitable seat, an electronic card, a switch, a possible tap for the battery recharge, a sound signal and a visual signal. In the lower part of the removable cover a drive shaft projects in position more or less central onto which is inserted by means of a joint and in removable way a further shaft on the lower part of which is mounted the frother utensil. In the lower part of the removable cover projects in lateral position the seat for the thermic sensor. So, advantageously respect to the prior arts, the present invented appliance permits to prepare warm milk with milk froth, pouring a certain quantity of milk into the reservoir which is heated to a certain heat source and with said reservoir closed to the a fitting cover. When the milk reaches a certain temperature the thermic sensor closes the electric circuit which starts the motor, the sound and/or visual indicators and, in case of heating by electric device, said sensor stops the heating phase. Other aims and advantages of the present invention are better understood in the under description, reported as a not limited example and referred to the drawing of sheets 1 and 2. In particular figure 1 is a total view and partially in section of the invention with the parts that form it. Figure 2 is partially exploded view of the invention with the outside parts. Referring to the enclosed drawings and in particular to figure 1 the appliance consists of milk reservoir 9 with a handle 1 and a fitting cover 2. Inside said cover 2 house an electronic card 3, an on-off switch 5, a light indicator 6 that with the sound indicator 12 have the work to advise the user when the milk is ready. Then are present rechargeable batteries 8 or piles whose feed the invented appliance if the same is not fed with alternated current. Then is provided an electric motor 16 on the shaft of which is mounted a joint 10 which permits to connect a second shaft 11 that brings at its end the frother 13. To the cover 2 is fixed a suitable seat 15 having in its inside a temperature sensor 14 able to close the electric circuit (not on the drawing) when the milk reaches a determined temperature. A plate 4 closed the cover 2 from the upper part and it is well anchored to the cover 2 and not manually removable. From said plate 4 projects an on-off switch 5, a light indicator 6 and recharging battery tap 7. In figure 2 the invented appliance is showed with the cover 2 in position of no working having in its inside the components described in figure 1. Said cover, easily handling, is inserted into the upper part f the milk reservoir 9 which is previously filled with a certain quantity of milk, so the frother 13 and the temperature sensor by its suitable seat 15 are immersed in the milk. A this stage the milk reservoir 9 with the cover 2 is heating by a heating source (for example a gas-ring flame or an integrated or not electric resistance). At a certain temperature of the milk the temperature sensor immersed in the same milk through its seat 15 closes the electric circuit and starts the frother 13 and the indicators 12 and 6. The during working of the frother 13 and of the indicators 12 and 6 can be regulated by means of the electronic card 3 or manually driven through the on-off switch 5. In the case that the milk into the container is heating onto a gas-ring flame the indicators 12 and 6 inform the user when the milk is ready. The user so can turn off the gas avoiding to heat the milk too much and avoiding also boring and dangerous coming out of the milk to the reservoir 9. In the case that the heating of the milk is actuated through an electric resistance, or other electric device, the temperature sensor 14 by means of the electronic card 3 or other electromechanical device can stop the resistance or other electric device so avoiding to heat the milk to much and avoiding the coming out of the milk from the reservoir 9.

## Claims

1. Appliance for warm milk preparation with or without milk froth **characterized** to the fact that an electromechanical system automatically drives the frother (13).

2. Appliance for warm milk preparation with or without milk froth **characterized** to the fact that a sound indicator (12) and a light indicator (6) inform the user that the milk is ready.

3. Appliance for warm milk preparation with or without milk froth **characterized in that** the milk heating is to be obtained by means of an electric device or a gas-ring flame.

4. Appliance for warm milk preparation with or without milk froth **characterized in that** the electric feeding is to be obtained by means of piles, rechargeable batteries or alternated current.

5. Appliance for warm milk preparation with or without milk froth **characterized in that** it can be fed by means of a separable base equipped with safety connectors and with an electric cable.

6. Appliance for warm milk preparation with or without milk froth **characterized in that** the electric circuit housed inside the cover (2) can be fed by safety contacts housing inside the milk reservoir (9).
